# EUROPEAN PATENT APPLICATION

(11) **EP 4 807 802 A1**
(43) Date of publication of application: **16.09.2026**
(21) Application number: 25849422.8
(22) Date of filing: 04.06.2025
(51) Int. Cl.: H01M 4/136

(54) **POSITIVE ELECTRODE SHEET AND LITHIUM-ION BATTERY USING SAME**

(30) Priority: 24.01.2025 CN 202510121448
(71) Applicant: Eve Power Co., Ltd., Jingmen, Hubei 448000 (CN)
(72) Inventor: WEN, Shengyao, Jingmen, Hubei 448000 (CN); LIU, Fanfen, Jingmen, Hubei 448000 (CN); YUAN, Dingding, Jingmen, Hubei 448000 (CN); HE, Wei, Jingmen, Hubei 448000 (CN)
(74) Representative: Biallo, Dario
(86) International application number: PCT/CN2025/098956
(87) International publication number: WO 2026/157099

(57) **Abstract**

The present application provides a cathode sheet and a lithium-ion battery utilizing the same. The cathode sheet comprises a current collector and a cathode active coating layer comprising a cathode active material. The cathode active material comprises at least three of a particle N1, a particle N2, a particle N3, a particle N4, and a particle N5, where the particle N1 is the cathode active material with a particle size of less than or equal to 100 nm, the particle N2 is the cathode active material with a particle size of 100-150 nm, the particle N3 is the cathode active material with a particle size of 150-250 nm, the particle N4 is the cathode active material with a particle size of 250-500 nm, and the particle N5 is the cathode active material with a particle size of more than 500 nm. In the cathode active material, according to the mass fraction, a proportion of the particle N1 is X1, a proportion of the particle N2 is X2, a proportion of the particle N3 is X3, a proportion of the particle N4 is X4, and a proportion of the particle N5 is X5; the X1, the X2, the X3, the X4, and the X5 are subjected to power-normalization treatment to obtain a normalization function, where the R² corresponding to the normalization function is R² ≥ 0.9. The cathode sheet has both high compaction density and excellent lithium ion transport performance.

## Description

This application claims priority to Chinese Patent Application No. 202510121448.7 filed with CNIPA on January 24, 2025, the disclosure of which is incorporated herein by reference in its entirety.

### TECHNICAL FIELD

The present application relates to the technical field of lithium batteries, and specifically relates to a cathode sheet and a lithium-ion battery utilizing the same.

### BACKGROUND

Lithium-ion batteries possess the advantages of high power density, high energy density, long cycle lifetime, low cost, and safety, and are considered an ideal choice for portable electronic devices, electric vehicles (EVs), hybrid electric vehicles (HEVs), and plug-in hybrid vehicles (PHEVs). With the advancement of technology and the expansion of application scenarios, the requirements of battery manufacturers for battery endurance are also rising. By increasing the compaction density of the electrode sheet, the ineffective space in the electrode sheet can be reduced, allowing the battery to contain more active materials in the same volume, thereby increasing the energy density of the battery. Batteries with higher energy density can store more electrical energy in the same volume, which means longer cycle lifetime of the battery, and electric vehicles utilizing the batteries can travel longer distances after a single charge, reducing the number of charges and improving practicality and convenience.

### TECHNICAL PROBLEM

If the compaction density of the electrode sheet is overly high, the contact resistance between the active material particles will increase and the lithium ion diffusion channels will decrease, thus the transmission path of lithium ions inside the electrode sheet will become unsmooth, which will affect the charging and discharging performance of the battery manifested as the capacity attenuation of the battery, the increase of internal resistance, and the decrease of cycle stability.

Therefore, it is necessary to develop a cathode sheet able to maintain a high lithium shuttle and having high compaction density.

### TECHNICAL SOLUTION

According to one aspect of the present application, a cathode sheet is provided. The cathode sheet comprises a current collector and a cathode active coating layer comprising a cathode active material. The cathode active material comprises at least three of a particle N1, a particle N2, a particle N3, a particle N4, and a particle N5, where the particle N1 is the cathode active material with a particle size of less than or equal to 100 nm, the particle N2 is the cathode active material with a particle size of 100-150 nm, the particle N3 is the cathode active material with a particle size of 150-250 nm, the particle N4 is the cathode active material with a particle size of 250-500 nm, and the particle N5 is the cathode active material with a particle size of more than 500 nm. In the cathode active material, according to the mass fraction, a proportion of the particle N1 is X1, a proportion of the particle N2 is X2, a proportion of the particle N3 is X3, a proportion of the particle N4 is X4, and a proportion of the particle N5 is X5; the X1, the X2, the X3, the X4, and the X5 are subjected to power-normalization treatment to obtain a normalization function, where the R² corresponding to the normalization function is R² ≥ 0.9.

According to another aspect of the present application, a lithium-ion battery is provided, which comprises the above cathode sheet.

### BENEFICIAL EFFECTS

The cathode sheet provided by the present application has both high compaction density and excellent lithium ion transport performance.

Other aspects will be appreciated upon reading and understanding the detailed description.

### DETAILED DESCRIPTION

According to one aspect of the present application, a cathode sheet is provided. The cathode sheet comprises a current collector and a cathode active coating layer comprising a cathode active material. The cathode active material comprises at least three of a particle N1, a particle N2, a particle N3, a particle N4, and a particle N5, where the particle N1 is the cathode active material with a particle size of less than or equal to 100 nm, the particle N2 is the cathode active material with a particle size of 100-150 nm, the particle N3 is the cathode active material with a particle size of 150-250 nm, the particle N4 is the cathode active material with a particle size of 250-500 nm, and the particle N5 is the cathode active material with a particle size of more than 500 nm. In the cathode active material, according to the mass fraction, a proportion of the particle N1 is X1, a proportion of the particle N2 is X2, a proportion of the particle N3 is X3, a proportion of the particle N4 is X4, and a proportion of the particle N5 is X5; the X1, the X2, the X3, the X4, and the X5 are subjected to power-normalization treatment to obtain a normalization function, where the R² corresponding to the normalization function is R² ≥ 0.9.

By comprehensively regulating the mass fraction of the particle N1 to the particle N5 with different particle size ranges in the cathode active material the X1 to the X5, the coefficient of determination R² corresponding to the normalization function obtained by subjecting the X1 to the X5 to normalization treatment is more than or equal to 0.9, which effectively optimized the stacking of the cathode active material, achieves high compaction density and improvement of the migration rate of lithium ions of the cathode sheet simultaneously, thereby improving the energy density and cycle stability of the battery. On the one hand, the mass fraction of the particle N1, the particle N2, the particle N3, the particle N4, and the particle N5 in a specific particle size range are comprehensively regulated, so that the cathode active material with a small particle size can fill the pores between the large particle sizes, which effectively improves the compaction density of the cathode sheet, thereby, the cathode sheet can contain more active substances in a unit volume, improving the volumetric energy density of the battery using the cathode sheet, and extending the cycle lifetime of the battery. On the other hand, the cathode active coating layer comprising the above particle N1, particle N2, particle N3, particle N4, and particle N5 has a high compaction density, and the electrolyte can infiltrate the pores between the particles of the cathode active material, ensuring that the transmission path of lithium ions in the cathode sheet is smooth, which is conducive to reducing the internal transmission impedance of the cathode sheet, increasing the deintercalation speed of lithium ions, and improving the rate performance and cycle stability of the battery using the cathode sheet. Specifically, 1, 2, 3, 4, and 5 are used as particle size classification markers for the particle N1, the particle N2, the particle N3, the particle N4, and the particle N5, respectively. The normalization method takes particle size classification labels as a abscissa coordinate, the mass fraction of particles in the cathode active material as an ordinate coordinate, and the power function as the function model for fitting, that is, the point values of (X1,1), (X2,2), (X3,3), (X4,4), and (X5,5) are fitted respectively. Methods such as the laser scattering method or the dynamic particle imaging analysis system can be used to test the particle size distribution of the cathode active material in the cathode sheet. Taking the laser scattering method as an example, the principle is to disperse the particle sample in a suitable liquid or gas at an appropriate concentration, and a monochromatic beam is passed through the sample; when the light encounters the particles, it scatters at different angles, and the scattered light is measured by a multivariate detector. Through an appropriate optical model and mathematical process, these quantified scattering data can be transformed to obtain the particle size volume distribution of particles.

Optionally, the normalization equation satisfies the coefficient of determination R² ≥ 0.99. In a case where the particle size range and mass fraction of the cathode active coating layer particles meet the coefficient of determination R² ≥ 0.99 in the above normalization equation, the particle size grading of the cathode active material particles is conducive to improving the efficient transport of lithium ions, optimizing the transport path of lithium ions in the cathode sheet, thereby improving the migration efficiency of lithium ions, and increasing the compaction density of the cathode sheet to a greater extent while ensuring the smooth transport of lithium ions.

Optionally, Y represents the normalization function, Y = aX³ + bX² + cX + d; Y satisfies that at least one of a, b, and c is not 0. Compared with the cathode sheet processed by other normalization functions, the cathode sheet fitted to X1-X5 by the normalization function with a specific coefficient in the above way has a higher compaction density, and the contact between the particles of the cathode active material is closer, which can improve the mechanical stability and cycle lifetime of the cathode sheet, and also help to improve the energy density of the battery, thereby optimizing the cycle lifetime of the battery, and improve the portability and practicability of the battery equipment.

Optionally, in the normalization function, a value range of a is -0.1-0.1, a value range of b is -0.5-0.5, a value range of c is -1.0-1.0, and a value range of d is -0.97-0.97. In a case where the particle size distribution of the cathode active material particles meets the value ranges of the coefficients a-e of the normalization function fall into the above ranges, respectively, the cathode sheet has high compaction density, and can achieve higher energy storage at the same volume, thereby extending the battery cycle lifetime.

Optionally, the cathode active material comprises at least four of the particle N1, the particle N2, the particle N3, the particle N4, and the particle N5. At least four particles in the N1-N5 are selected as the cathode active material, which could provide the cathode sheet with high compaction density more flexibly.

Optionally, according to the mass percentage, the total fraction of the particle N1, the particle N2, the particle N3, and the particle N4 in the cathode active material is more than or equal to 60%. By regulating the total mass fraction of N1-N4 in the cathode active material, a larger contact area can be provided for the interface reaction between the cathode active material and the electrolyte under the premise of ensuring the high compaction density of the cathode sheet, promoting the rapid diffusion of lithium ions, improving the ion transport rate, and helping to improve the rate performance and cycle stability of the battery using the cathode sheet.

Optionally, the cathode active material comprises the particle N1, the particle N2, the particle N3, and the particle N4.

Optionally, according to the mass fraction, a proportion X1 of the particle N1 in the cathode active material is 5%-15%; a proportion X2 of the particle N2 in the cathode active material is 20%-40%; a proportion X3 of the particle N3 in the cathode active material is 25%-40%; a proportion X4 of the particle N4 in the cathode active material is 10%-40%; and a proportion X5 of the particle N5 in the cathode active material is 0%-15%. In a case where the mass ratio of the particle N1, the particle N2, the particle N3, the particle N4, and the particle N5 in the cathode active material meets the above value range, the compaction density of the cathode sheet can be increased without sacrificing the lithium ion transport efficiency, which can optimize the migration path of lithium ions in the cathode sheet, reduce the obstacles of lithium ion migration paths, improve the rate performance and long-term cycle stability of the battery, and also improve the energy density and power output performance of the battery, and improve the overall performance of the battery.

Optionally, the cathode active material further comprises a phosphate material, and a general formula of the phosphate material is Li₁₊ₓFe_{y}M_{z}P_{α}O_{β}, wherein -0.05 ≤ x ≤ 0.15, 0.95 ≤ y + z ≤ 1.0, y ≠ 0, 0.98 ≤ α ≤ 1.0, 3.95 ≤ β ≤ 4.0, and M comprises at least one of Mn, Al, Mg, Ti, and Na. Since the phosphate materials are developed for lithium battery cathode materials, they have achieved good effects in the field of cathode battery materials due to good thermal stability, high safety and long cycle life; however, commercially available phosphate materials have the defect of low energy density. The cathode sheet is prepared according to the principle of the above particle size gradation using the phosphate material, which has the advantages of the above lithium cathode active material, and also overcomes the defect of low volumetric energy density. The battery using the cathode sheet can maintain cycle stability in high-temperature environments or other extreme conditions, and also has a large discharge capacity, strong endurance, and high cycle retention rate.

Optionally, the cathode active material comprises a phosphate composite material, the phosphate composite material comprises an inner core containing the phosphate material and an outer coating layer covering the inner core; the outer coating layer comprises Me element and/or C element, wherein the Me element is selected from at least one of Fe element, Mn element, Al element, Mg element, Ti element, and Na element.

The above phosphate composite has more lithium ion storage sites, good structural stability, and is not easily eroded by electrolytes. The cathode sheet using the phosphate composite material has higher ionic conductivity and electrical conductivity, and the battery using the cathode sheet has excellent cycle lifetime and rate performance.

Optionally, a mass fraction of the outer coating layer in the phosphate composite is less than or equal to 3 wt%.

Optionally, in a case where the outer coating layer comprises the C element, the outer coating layer comprises a carbon material, and a graphitization degree of the carbon material is 8-12%.

Optionally, a mass fraction of the carbon material in the cathode active material is less than or equal to 10wt%.

Optionally, in a case where the outer coating layer comprises the Me element, a mass fraction of the Me element in the cathode active material is less than or equal to 1wt%.

According to another aspect of the present application, a lithium-ion battery is provided, and the lithium-ion battery comprises the above cathode sheet.

Optionally, a compaction density of the cathode active coating layer is 2.65-2.75 g/cm³. The lithium-ion battery using the cathode sheet that meets the above requirements has excellent rate performance and cycle capacity retention, and the lithium-ion battery has small polarization and is not easy to attenuate during the cycling process.

In order to enable personnel in the technical field to better understand the technical solution in the present application, the technical solution of the present application will be clearly and completely described in combination with the embodiments of the present application, and it is obvious that the described embodiments are only part of the embodiments of the present application, not all embodiments. Based on the embodiments in the present application, all other embodiments obtained by ordinary technicians in the field without performing creative labor shall fall within the protection scope of the present application.

### Example 1

This example provides a cathode sheet, which comprises a current collector and a cathode active coating layer comprising a cathode active material. The cathode active material is lithium iron phosphate (LFP), and a compaction density of the cathode active coating layer is 2.70.

In this example, the cathode active material comprises a particle N1, a particle N2, a particle N3, a particle N4, and a particle N5; wherein the particle N1 is the cathode active material with a particle size of less than or equal to 100 nm, the particle N2 is the cathode active material with a particle size of 100-150 nm, the particle N3 is the cathode active material with a particle size of 150-250 nm, the particle N4 is the above cathode active material with a particle size of 250-500 nm, and the particle N5 is the above cathode active material with a particle size of more than 500 nm.

In the cathode active material, according to the mass fraction, a proportion of the particle N1 is X1, a proportion of the particle N2 is X2, a proportion of the particle N3 is X3, a proportion of the particle N4 is X4, and a proportion of the particle N5 is X5; the X1, the X2, the X3, the X4, and the X5 are subjected to power-normalization treatment to obtain a normalization function. X1 = 6%, X2 = 22%, X3 = 32%, X4 = 28%, X5 = 12%, satisfying X1 + X2 + X3 + X4 = 95% ≥ 60%.

Y representes a normalization function, Y = aX³ + bX² + cX + d, wherein a = -0.005, b = -0.011, c = 0.234, d = -0.160, and the coefficient of determination corresponding to the normalization function R² = 0.997 ≥ 0.99.

In other examples, the type of the cathode material can be adjusted according to the actual situation, and a phosphate material with a general formula of Li₁₊ₓFe_{y}M_{z}P_{α}O_{β} can be selected; wherein, -0.05 ≤ x ≤ 0.15, 0.95 ≤ y + z ≤ 1.0, y ≠ 0, 0.98 ≤ α ≤ 1.0, 3.95 ≤ β ≤ 4.0, M comprises at least one of Mn, Al, Mg, Ti, and Na. Or a phosphate composite can be selected, and the phosphate composite comprises an inner core containing the phosphate material and an outer coating layer covering the inner core, and the outer coating layer comprises Me element and/or C element, wherein the element Me is selected from at least one of Fe element, Mn element, Al element, Mg element, Ti element, and Na element.

Preparation of cathode sheet: the above cathode active material was used, carbon black was used as a conductive agent, and polyvinylidene fluoride was used as a binder, where the mass ratio of the cathode active material, the conductive agent, and the binder in the cathode active coating layer was 97:1.5:2. The above cathode active material were mixed with a solvent in turn, the cathode active material comprised a particle N1, a particle N2, a particle N3, a particle N4, and a particle N5, and then the conductive agent and the binder were added into the solvent, mixed evenly at a speed of 1000 ± 100 in a stirring tank, and added with a solvent to prepare a cathode slurry; the discharge viscosity of the cathode slurry was controlled to be 10000 ± 500, and the solid content was 70-80% to form a cathode slurry, and the cathode slurry was coated on an aluminum foil, vacuum dried at 120°C for 5 min, and cold pressed at 25 ± 5°C to obtain the cathode sheet.

### Example 2

Referring to the preparation method provided by Example 1, this example prepares a cathode sheet, which is different from Example 1 in that: the mass fraction of the particle N1, the particle N2, the particle N3, the particle N4, and the particle N5 in the cathode active material were adjusted to meet X1 = 7%, X2 = 22.5%, X3 = 34%, X4 = 22.5%, and X5 = 14%, then subjected the X1, the X2, the X3, the X4, and the X5 to power-normalization treatment to obtain a normalization function Y = aX³ + bX² + cX + d, wherein a = 0.006, b = -0.103, c = 0.456, d = -0.295, and the corresponding coefficient of determination was satisfied: R² = 0.93 ≥ 0.9. Other raw material proportions and preparation method were exactly the same as those of Example 1.

### Example 3

Referring to the preparation method provided by Example 1, this example prepares a cathode sheet, which is different from Example 1 in that: the mass fraction of the particle N1, the particle N2, the particle N3, the particle N4, and the particle N5 in the cathode active material were adjusted to meet X1 = 6%, X2 = 22%, X3 = 32%, X4 = 28%, and X5 = 12%, then subjected the X1, the X2, the X3, the X4, and the X5 to power-normalization treatment to obtain a normalization function Y with a functional expression Y = aX³ + bX² + cX + d, wherein a = 0, b = -0.056, c = 0.352, and d = -0.244. Other raw material proportions and preparation method were exactly the same as those of Example 1, especially the normalization function satisfied the corresponding R² = 0.989 ≥ 0.9.

### Example 4

Referring to the preparation method provided by Example 1, this example prepares a cathode sheet, which is different from Example 1 in that: the mass fraction of the particle N1, the particle N2, the particle N3, the particle N4, and the particle N5 in the cathode active material were adjusted to meet X1 = 13%, X2 = 35%, X3 = 35%, X4 = 17%, and X5 = 0%, then subjected the X1, the X2, the X3, the X4, and the X5 to power-normalization treatment to obtain a normalization function Y with a functional expression Y = aX³ + bX² + cX + d, wherein a = 0.019, b = -0.241, c = 0.82, and d = -0.47. Other raw material proportions and preparation method were exactly the same as those of Example 1, especially the normalization function satisfied the corresponding R² = 0.997 ≥ 0.9.

### Example 5

Referring to the preparation method provided by Example 1, this example prepares a cathode sheet, which is different from Example 1 in that: the mass fraction of the particle N1, the particle N2, the particle N3, the particle N4, and the particle N5 in the cathode active material were adjusted to meet X1 = 0%, X2 = 23%, X3 = 35%, X4 = 30%, and X5 = 12%, then subjected the X1, the X2, the X3, the X4, and the X5 to power-normalization treatment to obtain a normalization function Y with a functional expression Y = aX³ + bX² + cX + d, wherein a = - 0.002, b = -0.056, c = 0.416, and d = -0.36. Other raw material proportions and preparation method were exactly the same as those of Example 1, especially the normalization function satisfied the corresponding R² = 0.998 ≥ 0.9.

### Example 6

Referring to the preparation method provided by Example 1, this example prepares a cathode sheet, which is different from Example 1 in that: the mass fraction of the particle N1, the particle N2, the particle N3, the particle N4, and the particle N5 in the cathode active material were adjusted to meet X1 = 0%, X2 = 26%, X3 = 40%, X4 = 34%, and X5 = 0%, then subjected the X1, the X2, the X3, the X4, and the X5 to power-normalization treatment to obtain a normalization function Y with a functional expression Y = aX³ + bX² + cX + d, wherein a = 0, b = -0.1, c = 0.64, and d = -0.62. Other raw material proportions and preparation method were exactly the same as those of Example 1, especially the normalization function satisfied the corresponding R² = 0.999 ≥ 0.9.

### Example 7

Referring to the preparation method provided by Example 1, this example prepares a cathode sheet, which is different from Example 1 in that: the mass fraction of the particle N1, the particle N2, the particle N3, the particle N4, and the particle N5 in the cathode active material were adjusted to meet X1 = 20%, X2 = 20%, X3 = 20%, X4 = 20%, and X5 = 20%. At this time, the functional expression of the normalization function Y was Y =0.2. Other raw material proportions and preparation method were exactly the same as those of Example 1, especially the normalization function satisfied the corresponding R² = 1 ≥ 0.9.

### Example 8

Referring to the preparation method provided by Example 1, this example prepares a cathode sheet, which is different from Example 1 in that lithium manganese iron phosphate (LMFP) with equal particle size and equal mass fraction was used to replace the cathode active material in Example 1. Other raw material proportions and preparation method were exactly the same as those of Example 1, especially the normalization function satisfied the corresponding R² ≥ 0.9.

### Example 9

Referring to the preparation method provided by Example 7, this example prepares a cathode sheet, which is different from Example 7 in that lithium manganese iron phosphate (LMFP) with equal particle size and equal mass fraction was used to replace the cathode active material in Example 7. Other raw material proportions and preparation method were exactly the same as those of Example 7, especially the normalization function satisfied the corresponding R² ≥ 0.9.

### Comparative Example 1

Referring to the preparation method provided by Example 1, this comparative example prepares a cathode sheet, which is different from Example 1 in that: in this comparative example, the cathode active material comprises a particle N1, a particle N2, a particle N3, a particle N4, a particle N5, and a particle 6; wherein the particle N1 is the cathode active material with a particle size of less than or equal to 100 nm, the particle N2 is the cathode active material with a particle size of 100-150 nm, the particle N3 is the cathode active material with a particle size of 150-250 nm, the particle N4 is the above cathode active material with a particle size of 250-500 nm, the particle N5 is the above cathode active material with a particle size of 500-1000 nm, and particle N6 is the cathode active material with a particle size of more than 1000 nm. In the cathode active material, according to the mass fraction, a proportion of the particle N1 is X1, a proportion of the particle N2 is X2, a proportion of the particle N3 is X3, a proportion of the particle N4 is X4, a proportion of the particle N5 is X5, and a proportion of the particle N6 is X6, meeting X1 = 1%, X2 = 5%, X3 = 22%, X4 = 12%, X5 = 15%, and X6 = 45%, then subjected the X1, the X2, the X3, the X4, the X5, and the X6 to power-normalization treatment to obtain a normalization function Y with a functional expression Y = aX³ + bX² + cX + d, wherein a = 0.018, b = -0.172, c = 0.534, d = -0.393. The coefficient of determination corresponding to the normalization function obtained by power normalization of X1, X2, X3, X4, X5, and X6 are satisfied: R² = 0.880 < 0.9. Other raw material proportions and preparation method were exactly the same as those of Example 1.

### Preparation Example

### (1) Cathode sheet

The cathode sheets provided by the above Examples 1-9 and Comparative Example 1 were adopted, respectively.

### (2) Preparation of anode sheet

The anode sheet was prepared by using graphite as an anode active material, SP and CNT as a conductive agent, and CMC, SBR, and PAA as a binder, and the above anode active material, conductive agent, and binder were mixed according to a mass ratio of 96:2:2, respectively, to form an anode slurry, and then the anode slurry was coated on a copper foil and vacuum dried at 90°C for 5 min to obtain the anode sheet.

### (3) Preparation of lithium-ion battery

The separator was selected with PE + OBS separator; the cathode sheet, the separator, and the anode sheet were stacked in order, and the battery cell was obtained through the lamination process; the battery cell was placed in an outer packaging shell, dried, then a lithium ions-containing organic electrolyte was injected from a liquid injection hole, and the process of vacuum encapsulation, resting, formation, and volume separation were carried out to obtain the lithium-ion battery.

### Test Example 1

Test objects: the cathode sheets provided by Examples 1-9 and Comparative Example 1 were prepared into lithium-ion batteries, respectively, and the specific preparation methods are shown in the preparation example.

### Test items and test methods

(1) Compaction density: equipment from SUNS was used; 0.8 g of a cathode active material sample was weighed and loaded into a mold, and a compaction test was performed with a force of 3 T, and the compaction density of the powder was recorded. The thickness and weight of the cathode sheet were measured, and the compaction density of the electrode sheet was calculated.
(2) Cycle test at 25°C and 1C: a lithium-ion battery was prepared using the above test object as the cathode active material; the lithium-ion battery was charged to 2.5-3.65 V (LFP) / 2.5-4.2 V (LMFP) at constant current-constant voltage of 1C and 25°C with a cut-off current of 0.05C, and stood for 10 min;
   then discharged at constant current of 1C to 2.5 V, and charged to 3.65 V (LFP) / 4.2 V (LMFP) at constant current-constant voltage of 1C and 25°C with a cut-off current of 0.05C, then stood for 10 min. This was considered one charge-discharge cycle. The number of cycles after which the capacity of the lithium-ion battery dropped to 80% of its initial capacity was recorded.
(3) Discharge specific capacity at 1C: the lithium-ion battery was charged to 2.5-3.65 V (LFP) / 2.5-4.2 V (LMFP) at constant current-constant voltage of 1C and 25°C with a cut-off current of 0.05C, and stood for 10 min; then discharged to 2.5 V at constant current of 1C, and the discharge capacity Q_{1C}-initial was recorded as the initial discharge capacity. Next, the battery was charged to 3.65 V (LFP) / 4.2 V (LMFP) at constant current-constant voltage of 1C and 25°C with a cut-off current of 0.05C, and stood for 10 min; then the fully charged battery was discharged to 2.5 V at constant current of 1C, and the discharge capacity Q_{1C} was recorded. Finally, the energy density (Wh/L) of the cell at 1C was calculated based on the discharge capacity Q_{1C} and the thickness of the cathode sheet.

Test Results: The particle size parameters and functional parameters of each test object are shown in Table 1, while the corresponding test results are shown in Table 2.

**Table 1 Particle size parameters and functional parameters of each test object**

| Group | X1 | X2 | X3 | X4 | X5 | a | b | c | d | R² |
|---|---|---|---|---|---|---|---|---|---|---|
| Example 1 | 6 | 22 | 32 | 28 | 12 | -0.005 | -0.011 | 0.234 | -0.16 | 0.997 |
| Example 2 | 7 | 22.5 | 34 | 22.5 | 14 | 0.006 | -0.103 | 0.456 | -0.295 | 0.93 |
| Example 3 | 6 | 22 | 32 | 28 | 12 | 0 | -0.056 | 0.352 | -0.244 | 0.989 |
| Example 4 | 13 | 35 | 35 | 17 | 0 | 0.019 | -0.241 | 0.82 | -0.47 | 0.997 |
| Example 5 | 0 | 23 | 35 | 30 | 12 | -0.002 | -0.056 | 0.416 | -0.36 | 0.998 |
| Example 6 | 0 | 26 | 40 | 34 | 0 | 0 | -0.1 | 0.64 | -0.62 | 0.999 |
| Example 7 | 20 | 20 | 20 | 20 | 20 | 0 | 0 | 0 | 0.2 | 1 |
| Example 8 | 6 | 22 | 32 | 28 | 12 | -0.005 | -0.011 | 0.234 | -0.16 | 0.997 |
| Example 9 | 20 | 20 | 20 | 20 | 20 | 0 | 0 | 0 | 0.2 | 1 |
| Comparative Example 1 | 1 | 5 | 22 | 12 | 15 | 0.018 | -0.172 | 0.534 | -0.393 | 0.880 |

**Table 2 Test results of each test object**

| Group | Compaction of powder /3T | Compaction of electrode sheet (g/cm³) | Cycle numbers at 1C and 25°C @80%SOC | Discharge specific capacity at 1C (mAh/g) | Energy density at 1C (Wh/L) |
|---|---|---|---|---|---|
| Example 1 | 2.7 | 2.7 | 8000 | 145 | 470 |
| Example 2 | 2.75 | 2.75 | 7000 | 143 | 465 |
| Example 3 | 2.7 | 2.7 | 8000 | 145 | 470 |
| Example 4 | 2.55 | 2.55 | 6500 | 147 | 460 |
| Example 5 | 2.75 | 2.75 | 7500 | 141 | 455 |
| Example 6 | 2.6 | 2.6 | 6000 | 139 | 430 |
| Example 7 | 2.5 | 2.5 | 6000 | 141 | 440 |
| Example 8 | 2.7 | 2.7 | 7500 | 136 | 490 |
| Example 9 | 2.5 | 2.5 | 5000 | 139 | 475 |
| Comparative Example 1 | 2.7 | 2.7 | 3000 | 134 | 430 |

### Result analysis

From the comparison of the test performance of cathode sheets and lithium-ion batteries provided by Examples 1-9 and Comparative Example 1 as shown in Table 2, it can be seen that the lithium-ion batteries provided by Examples 1-9 demonstrate superior energy density and enhanced cycling stability compared to Comparative Example 1, which is due to the optimized compaction density of the cathode active material and faster lithium-ion migration rate within the cathode sheets provided by Examples 1-9.

From the comparison of the performance data provided by Example 1, Examples 4-6, and Comparative Example 1, it can be seen that the cycle numbers @80%SOC of lithium-ion batteries provided by Example 1 and Examples 4-6 at 1C and 25°C is greater than the cycle numbers @80%SOC of the lithium-ion battery provided by Comparative Example 1 at 1C and 25°C. This is due to the cathode active materials in the cathode sheets of Example 1 and Examples 4-6 comprising the particle N1 to the particle N5. After subjecting the particle N1 to the particle N5 to power-normalization treatment, the R² corresponding to the obtained normalization function is R² ≥ 0.9. In Comparative Example 1, the cathode active material yields a normalization function with corresponded R² ≥ 0.9, indicating a different particle packing method for the cathode active material in Comparative Example 1 compared to Examples 1-9. Consequently, this is reflected in performance metrics as the electrochemical performance of the lithium-ion batteries provided by Example 1 and Examples 4-6 being superior to the electrochemical performance of the lithium-ion battery provided by Comparative Example 1.

Furthermore, the electrochemical performance of lithium-ion batteries from Example 1 and Examples 4-5 surpasses that of Example 6, demonstrating that utilizing at least four particles of N1-N5 as the cathode active material enables more flexible optimization of cathodes with high compaction density. Additionally, Example 1 and Example 5 exhibit superior electrochemical performance compared to Example 4, indicating that in a case where the cathode active material comprises the particle N1, the particle N2, the particle N3, and the particle N4, the corresponding lithium-ion battery achieves enhanced cycling stability.

From the comparison of the performance data provided by Examples 1-3, it can be seen that as the R² of the normalization function approaches 1, the corresponding lithium-ion batteries exhibit monotonic improvements in cycling stability and energy density. Specifically, the cycle numbers @80%SOC of Example 1 at 1C and 25°C is greater than the cycle numbers @80%SOC of Example 2 and Example 3 at 1C and 25°C, indicating that when the particle size distribution and mass fraction of the cathode active coating particles satisfy the coefficient of determination R² ≥ 0.99 in the normalization equation, the particle size grading of the cathode active material particles is conducive to enhance the efficient transmission of the lithium-ion within the cathode sheet, thereby optimizing the cycling stability of the battery.

From the comparison of the lithium-ion batteries provided by Example 1 and Examples 7-9, it can be seen that the electrochemical performance of the lithium-ion battery in Example 1 is superior to that of the lithium-ion battery in Example 7, and the electrochemical performance of the lithium-ion battery in Example 8 is superior to that of the lithium-ion battery in Example 9. This indicates that when the particle size distribution of the cathode active material in the cathode sheet allows the normalization equation to meet the required range for the coefficient of determination, the types of cathode active materials can be flexibly selected according to actual applications.

## Claims

1. A cathode sheet, which comprises a current collector and a cathode active coating layer comprising a cathode active material; the cathode active material comprises at least three of a particle N1, a particle N2, a particle N3, a particle N4, and a particle N5, where the particle N1 is the cathode active material with a particle size of less than or equal to 100 nm, the particle N2 is the cathode active material with a particle size of 100-150 nm, the particle N3 is the cathode active material with a particle size of 150-250 nm, the particle N4 is the cathode active material with a particle size of 250-500 nm, and the particle N5 is the cathode active material with a particle size of more than 500 nm;
in the cathode active material, according to the mass fraction, a proportion of the particle N1 is X1, a proportion of the particle N2 is X2, a proportion of the particle N3 is X3, a proportion of the particle N4 is X4, and a proportion of the particle N5 is X5; the X1, the X2, the X3, the X4, and the X5 are subjected to power-normalization treatment to obtain a normalization function, where the R² corresponding to the normalization function is R² ≥ 0.9.

2. The cathode sheet according to claim 1, wherein the normalization equation satisfies the coefficient of determination R² ≥ 0.99.

3. The cathode sheet according to claim 1, wherein
Y represents the normalization function, Y = aX³ + bX² + cX + d; Y satisfies that at least one of a, b, and c is not 0.

4. The cathode sheet according to claim 3, wherein in the normalization function, a value range of a is -0.1-0.1, a value range of b is -0.5-0.5, a value range of c is -1.0-1.0, and a value range of d is -0.97-0.97.

5. The cathode sheet according to claim 1, wherein the cathode active material comprises at least four of the particle N1, the particle N2, the particle N3, the particle N4, and the particle N5.

6. The cathode sheet according to claim 5, wherein, according to the mass percentage, a total fraction of the particle N1, the particle N2, the particle N3, and the particle N4 in the cathode active material is more than or equal to 60%.

7. The cathode sheet according to claim 6, wherein the cathode active material comprises the particle N1, the particle N2, the particle N3, and the particle N4.

8. The cathode sheet according to claim 7, wherein according to the mass fraction:
a proportion X1 of the particle N1 in the cathode active material is 5%-15%;
a proportion X2 of the particle N2 in the cathode active material is 20%-40%;
a proportion X3 of the particle N3 in the cathode active material is 25%-40%;
a proportion X4 of the particle N4 in the cathode active material is 10%-40%; and
a proportion X5 of the particle N5 in the cathode active material is 0%-15%.

9. The cathode sheet according to any one of claims 1-8, wherein the cathode active material comprises a phosphate material, and a general formula of the phosphate material is Li₁₊ₓFe_{y}M_{z}P_{α}O_{β}, wherein -0.05 ≤ x ≤ 0.15, 0.95 ≤ y + z ≤ 1.0, y ≠ 0, 0.98 ≤ α ≤ 1.0, 3.95 ≤ β ≤ 4.0, and M comprises at least one of Mn, Al, Mg, Ti, and Na.

10. The cathode sheet according to claim 9, wherein the cathode active material comprises a phosphate composite material, the phosphate composite material comprises an inner core containing the phosphate material and an outer coating layer covering the inner core; the outer coating layer comprises Me element and/or C element, wherein the Me element is selected from at least one of Fe element, Mn element, Al element, Mg element, Ti element, and Na element.

11. A lithium-ion battery, which comprises the cathode sheet according to any one of claims 1-10.

12. The lithium-ion battery according to claim 11, wherein a compaction density of the cathode active coating layer is 2.55-2.85 g/cm³.
